## Europäisches Patentamt
## European Patent Office
## Office européen des brevets

(19)

(11) Veröffentlichungsnummer: **0 119 496**
**B1**

(12)

# EUROPÄISCHE PATENTSCHRIFT

(45) Veröffentlichungstag der Patentschrift:
20.07.88

(51) Int. Cl.⁴: **C 03 B 35/08,** B 65 G 47/84

(21) Anmeldenummer: **84101746.0**

(22) Anmeldetag: **20.02.84**

(54) **Für die Glaswarenindustrie bestimmte Transport-Vorrichtung.**

(30) Priorität: **23.02.83 DE 3306278**

(43) Veröffentlichungstag der Anmeldung:
**26.09.84 Patentblatt 84/39**

(45) Bekanntmachung des Hinweises auf die Patenterteilung:
**20.07.88 Patentblatt 88/29**

(84) Benannte Vertragsstaaten:
**FR GB SE**

(56) Entgegenhaltungen:
**AU-B-3 603 878**
**DE-C-535 012**
**GB-A-723 441**
**GB-A-1 309 738**

(73) Patentinhaber: **Firma Ernst Pennekamp, Hölker Feld 22, D-5600 Wuppertal 2 (DE)**

(72) Erfinder: **Seidel, Hans Joachim, Ing., Hölker Feld 22, D-5600 Wuppertal 2 (DE)**
Erfinder: **Käseberg, Gerd, Büttenbergerstrasse 20a, D-5828 Ennepetal (DE)**

(74) Vertreter: **Mentzel, Norbert, Dipl.- Phys., Patentanwälte Dipl.- Phys. Buse Dipl.- Phys. Mentzel Dipl.- Ing. Ludewig Unterdörnen 114, D-5600 Wuppertal 2 (DE)**

## Beschreibung

Die Erfindung bezieht sich auf eine für Hohlglasbehälter bestimmte Transport-Vorrichtung, die aus Transportbändern und einer Übergabe-Vorrichtung besteht, deren Übergabekopf mit umlaufenden Mitnehmern ausgerüstet ist und sowohl bei winkliger als auch bei paralleler Anordnung der mit ihm zusammenwirkenden, in unterschiedlichen Geschwindigkeiten sich bewegenden Transportbändern heiße Hohlglasbehälter von einem Transportband auf ein anderes übersetzt. Solche Vorrichtungen werden benötigt, um heiße Glaswaren von den Fertigungsmaschinen, in denen sie erzeugt werden, zur Nachbehandlung zu den Kühlöfen zu transportieren.

Bei bekannten Ausführungsformen der gattungsgemäßen Art (GB-PS-723 441) arbeiten die Übergabeköpfe mit starren oder einziehbaren, fingerartigen Mitnehmern, die die heißen Glaswaren von dem einen Transportband auf das nächste schieben. Häufig werden die heißen Glaswaren beim Übersetzvorgang durch die Schiebebewegung der Mitnehmer in Taumelbewegungen versetzt. Dieses kann zur Folge haben, daß die heißen Glaswaren auf dem Transportband umkippen und ungeordnet oder beschädigt dem Kühlofen zugeführt werden. Hierdurch wird die Qualität der Glaswaren verschlechtert.

Der Erfindung liegt die Aufgabe zugrunde, eine Transport-Vorrichtung der eingangs beschriebenen Art zu schaffen, bei der die heißen Hohlglasbehälter geordnet von der Fertigungsmaschine zu dem Kühlofen gelangen, wobei Hohlglasbehälter mit Ausschußmerkmalen aussortiert und vom Weitertransport ausgeschlossen werden. Zur Lösung dieser Aufgabe wird erfindungsgemäß vorgeschlagen, daß der Übergabekopf unmittelbar oder mittelbar unter Zwischenschaltung eines endlosen, flexiblen Transportelementes (z. B. einer Kette) eine Vielzahl von auswechselbaren, den Hohlglasbehältern angepaßten Trägergliedern trägt, daß sämtliche Trägerglieder über einen Rotationsverteiler mit einem Vakuum-Erzeuger in Verbindung stehen, der über in die Trägerglieder eingebrachte Öffnungen die heißen Hohlglasbehälter während des Übersetzvorganges von dem einen Transportband auf das andere durch Unterdruck zeitweilig an den Trägergliedern festhält, und daß die heißen Hohlglasbehälter während des Übersetzvorganges durch zusätzliche Vorrichtungen pneumatisch von dem Transportband abhebbar und/oder gegen Bereiche der Trägerglieder anpreßbar sein können, wobei die Zeitdauer des Ansaugens und/oder des Anpressens der Hohlglasbehälter an die Trägerglieder durch Ventile, die jedes Trägerglied aufweist, regelbar ist. Hierdurch wird eine optimale Plazierung der heißen Hohlglasbehälter auf den Transportbändern unter gleichzeitiger Verhinderung von Taumelbewegungen erreicht, während andererseits die Hohlglasbehälter störungsfrei von dem Transportband der Glaswaren-Fertigungsmaschine zum langsamer laufenden Quertransportband des Kühlofens auch bei hoher Produktionsleistung übergeben werden. Ferner werden gleichbleibende Abstände zwischen den heißen Hohlglasbehältern bei ihrem Transport zum Kühlofen gewährleistet. Da die Zeitdauer des Ansaugens und/oder des Anpressens der heißen Hohlglasbehälter an die Trägerglieder mit Hilfe von Ventilen steuerbar ist, die jedes Trägerglied aufweist, kann die Wirkungsweise einzelner Trägerglieder ausgeschaltet werden

Die Ansaug und/oder die Anpreßdauer der Hohlglasbehälter an die Trägerglieder kann zweckmäßig lageabhängig (z. B. winkelabhängig) steuerbar sein.

Zur weiteren Verbesserung der Anlage der heißen Glaswaren an den Trägergliedern empfiehlt es sich, die Transportbänder im Bereich des Einlaufs am Übergabekopf - quer zur Flußrichtung der Hohlglasbehälter - geneigt verlaufen zu lassen. Hierdurch werden die heißen Glaswaren durch ihr Eigengewicht den Trägergliedern zugeführt.

Die vorteilhaft sichelartig geformten Trägerglieder können auf der Rückseite eben gehalten sein, während die Vorderseite bogenartig verläuft und eine Anschlagnase aufweisen kann. Hierdurch wird nicht nur eine sichere Führung der heißen Glaswaren bei dem Übersetzvorgang ermöglicht, sondern es wird auch erreicht, daß die Trägerglieder durch einfaches Wenden sowohl bei rechtsumlaufenden als auch bei linksumlaufenden Transportbändern verwendet werden können.

Zur Vermeidung von Gesundheitsschäden des Betriebspersonals empfiehlt es sich, die Trägerglieder aus asbestfreiem Werkstoff zu fertigen.

Die Trägerglieder können lösbar und justierbar an dem Überführungsteller befestigt sein. Es ist aber auch möglich, die Trägerglieder unter Zwischenschaltung eines endlosen flexiblen Transportelements (z. B. einer Kette) an dem Überführungsteller zu befestigen.

Vorteilhaft wirkt die erfindungsgemäße Übergabevorrichtung mit einer Zählvorrichtung zusammen.

Des weiteren kann die Übergabevorrichtung mit einem Phasenverstellgetriebe ausgerüstet sein. Die Trägerglieder können radial verschieblich steuerbar angeordnet sein. Es könnte auch zweckmäßig sein, die Trägerglieder nacheinander mit Vakuum und mit Druckluft zu beaufschlagen. Schließlich wäre es auch möglich, die Trägerglieder axial verschieblich anzuordnen.

Auf der Zeichnung ist die Erfindung in mehreren Ausführungsbeispielen dargestellt. Es zeigen:

Fig. 1 eine erste Ausführungsform,
Fig. 2 eine zweite Ausführungsform, und

Fig. 3 eine dritte Ausführungsform - jeweils in schematischer Ansicht -,

Fig. 4 ein Trägerglied in vergrößerter Rückansicht, und

Fig. 5 einen Teil des Übergabekopfes in vergrößerter Draufsicht.

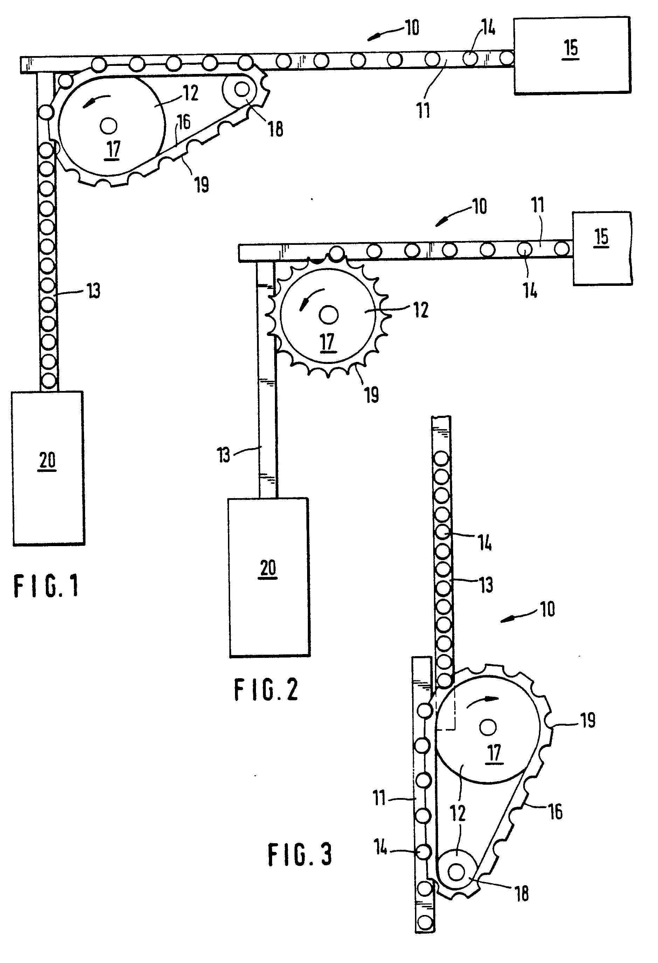

In den Fig. 1, 2 und 3 sind drei verschiedene Ausführungsformen einer Transport-Vorrichtung 10 schematisch dargestellt. Diese besteht in allen drei Fällen aus einem Maschinen-Transportband 11, einer Übergabe-Vorrichtung mit Übergabekopf 12 und einem Quer-Transportband 13. Die Umlaufrichtung ist auf den Übergabeköpfen 12 durch Pfeile markiert. Die glühend heißen Glaswaren 14 in Form von stehenden Hohlglasbehältern werden in der Fertigungsmaschine 15 erzeugt. Sie werden über das Maschinen-Transportband 11, auf rechtstehend, dem Übergabekopf 12 zugeführt. In der Fig. 1 trägt der Übergabekopf 12 der Übergabe-Vorrichtung unter Zwischenschaltung eines flexiblen Transportelements 16, das auf dem Überführungsteller 17 und einer vorgeschalteten Führungsrolle 18 abrollt, Trägerglieder 19. Bei der Umlaufbewegung werden die Kohlglasbehälter 14 nacheinander von den Trägergliedern 19 erfaßt und auf das langsamer umlaufende Quer-Transportband 13, das im rechten Winkel zu dem Maschinenband 11 angeordnet ist, übergesetzt. Hierhei verringern sich, wie aus der Fig. 1 ersichtlich, die Abstände zwischen den Hohlglasbehältern 14. Die auf rechtstehenden Hohlglasbehälter 14 werden nun dem Kühlofen 20 zugeführt.

Die in der Fig. 2 gezeigte zweite Ausführungsform weist einen Übergabekopf 12 auf, bei dem die Trägerglieder 19 unmittelbar an dem Überführungsteller 17 sitzen. Die übrigen Bestandteile der zweiten Ausführungsform entsprechen der ersten, so daß hierfür die gleichen Bezugszeichen verwendet wurden.

Bei der dritten Ausführungsform sind das Maschinen-Transportband 11 und das Transportband 13 parallel nebeneinander angeordnet, wobei sich die Enden der beiden Transportbänder 11, 13 im Bereich des Übergabekopfes 12 überlappen. Der Übergabekopf 12 weist den gleichen Aufbau wie derjenige der ersten Ausführungsform auf. Es wurden deshalb hierfür die gleichen Bezugszeichen verwandt.

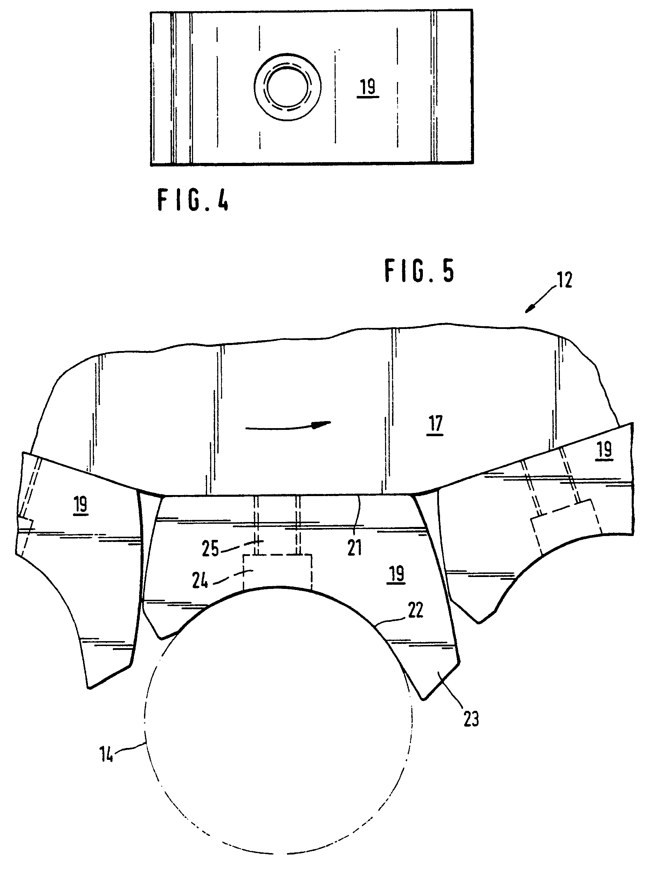

Die Fig. 5 zeigt einen Abschnitt des Übergabekopfes 12 entsprechend der zweiten Ausführungsform (Fig. 2) in vergrößerter Draufsicht. Wie daraus ersichtlich, sitzen die Trägerglieder 19 unmittelbar am Überführungsteller 17. Die Trägerglieder 19 sind sichelartig ausgebildet. Sie bestehen aus asbestfreiem Werkstoff und haben eine eben gehaltene Rückseite 21. Die Vorderseite 22 der Trägerglieder verläuft bogenartig und ist mit einer angesetzten Anschlagnase 23 ausgestattet. Wie sich aus der Fig. 5 ergibt, wird der heiße Hohlglasbehälter 14 bereichsweise von der bogenartig geformten Vorderseite 22 des Trägergliedes 19 beim Übersetzvorgang umgriffen. Unterhalb des Übergabekopfes 12 ist ein nicht dargestellter Vakuum-Erzeuger angeordnet, der mit Hilfe eines Rotationsverteilers über in die Trägerglieder 19 eingebrachte Öffnungen 24 die heißen Hohlglasbehälter 14 während des Übersetzvorganges ansaugt und zeitweilig an den Wandungen des Trägergliedes 19 festhält. In den Öffnungen sitzen Ventile 25, mit deren Hilfe die Ansaugungg der Hohlglasbehälter 14 unterbrochen werden kann. Die Trägerglieder 19 lassen sich leicht auswechseln, um den verschiedenen Formen der Glaswaren Rechnung tragen zu können.

Wie bereits erwähnt, ist die dargestellte Ausführungsform nur eine beispielsweise Verwirklichung der Erfindung. Diese ist nicht darauf beschränkt. Es sind noch mancherlei Abänderungen und Ausbildungen möglich. So könnten zusätzliche Vorrichtungen vorgesehen sein, die während des Übersetzvorganges die heißen Glaswaren pneumatisch von dem Transportband abheben oder gegen Bereiche der Trägerglieder anpressen. Dieses empfiehlt sich bei schweren Glaswaren, um den Anpreßdruck beim Übersetzvorgang zu vergrößern. Des weiteren kann die erfindungsgemäße Transport-Vorrichtung mit einer Zählvorrichtung zusammenwirken. Die Übergabe-Vorrichtung kann ein Phasenverstellgetriebe aufweisen. Auch die Halterung der Trägerglieder 19 kann unterschiedlich ausgebildet sein.

Es wäre denkbar, die Trägerglieder 19 radial verschieblich steuerbar anzuordnen. Die Trägerglieder 19 könnten nacheinander mit Vakuum und mit Drucklutft beaufschlagt werden. Möglich ist es auch, die Trägerglieder 19 axial verschieblich zu befestigen. Die Transportbänder 11, 13 können, abweichend von den in den Fig. 1 und 2 gezeigten Ausführungsformen, stumpfe und spitze Winkel miteinander bilden.

**Bezugszeichenliste:**

10 Transport-Vorrichtung
11 Maschinen-Transportband
12 Übergabekopf
13 Quer-Transportband
14 Glaswaren
15 Glaswaren-Fertigungsmaschine
16 flexibles Transportelement
17 Überführungsteller
18 Führungsrolle
19 Trägerglieder
20 Kühlofen
21 ebene Rückseite des Trägergliedes 19
22 bogenartige Vorderseite des Trägergliedes 19
23 Anschlagnase
24 Öffnungen im Trägerglied 19
25 Ventile im Trägerglied 19

**Patentansprüche**

1. Für Hohlglasbehälter bestimmte Transport-Vorrichtung (10), die aus Transportbändern (11, 13) und einer Übergabe-Vorrichtung besteht, deren Übergabekopf (12) mit umlaufenden Mitnehmern ausgerüstet ist und sowohl bei winkliger als auch bei paralleler Anordnung der mit ihm zusammenwirkenden, in unterschiedlichen Geschwindigkeiten sich bewegenden Transportbändern (11, 13) heiße Hohlglasbehälter (14) von dem einen Transportband (11) auf ein anderes (13) übersetzt, dadurch gekennzeichnet, daß der Übergabekopf (12) unmittelbar oder mittelbar unter Zwischenschaltungg eines endlosen, flexiblen Transportelementes (16) (z. B. einer Kette) eine Vielzahl von auswechselbaren, den Hohlglasbehältern (14) angepaßten Trägergliedern (19) trägt, daß sämtliche Trägerglieder (19) über einen Rotationsverteiler mit einem Vakuum-Erzeuger in Verbindung stehen, der über in die Trägerglieder (19) eingebrachte Öffnungen (24) die heißen Hohlglasbehälter (14) während des Übersetz vorganges von dem einen Transportband (11) auf das andere (13) durch Unterdruck zeitweilig an den Träger gliedern (19) festhält, und daß die Hohlglasbehälter (14) während des Übersetzvorganges durch zusätzliche Vorrichtungen pneumatisch von dem Transportband abhebbar und/oder gegen Bereiche der Trägerglieder (19) anpreßbar sind, wobei die Zeitdauer des Ansaugens und/oder des Anpressens der Hohlglasbehälter (14) an die Trägerglieder (19) durch Ventile (25), die jedes Trägerglied (19) aufweist, regelbar ist.

2. Vorrichtung nach Anspruch 1, dadurch gekennzeichnet, daß die Ansaug und oder Anpreßdauer der Hohlglasbehälter (14) an die Trägerglieder (19) lageabhängig (z. B. winkelabhängig) steuerbar ist.

3. Vorrichtung nach Anspruch 1 und 2, dadurch gekennzeichnet, daß die Transportbänder (11, 13) im Bereich des Einlaufs am Übergabekopf (12) - quer zur Flußrichtung der Hohlglasbehälter (14) - geneigt verlaufen.

4. Vorrichtung nach Anspruch 1 bis 3, dadurch gekennzeichnet, daß die sichelartig geformten Trägerglieder (19) auf ihrer Rückseite (21) eben gehalten sind, während die Vorderseite (22) bogenartig verläuft und eine Anschlagnase aufweist.

5. Vorrichtung nach Anspruch 4, dadurch gekennzeichnet, daß die Trägerglieder (19) aus asbestfreiem Werkstoff gefertigt sind.

6. Vorrichtung nach Anspruch 1 bis 5, dadurch gekennzeichnet, daß die Trägerglieder (19) lösbar, verschieblich und justierbar am Übergabekopf (12) befestigt sind.

7. Vorrichtung nach Anspruch 1 bis 6, dadurch gekennzeichnet, daß die Übergabe-Vorrichtung mit einer Zählvorrichtung zusammenwirkt.

8. Vorrichtung nach Anspruch 1 bis 7, dadurch gekennzeichnet, daß die Übergabe-Vorrichtung mit einem Phasenverstellgetriebe ausgerüstet ist.

9. Vorrichtung nach Anspruch 1 bis 8, dadurch gekennzeichnet, daß die Trägerglieder (19) nacheinander mit Vakuum und mit Druckluft beaufschlagt sind.

**Claims**

1. A transportation apparatus (10) which is intended for hollow glass containers and which crises transportation belts (11, 13) and a transfer device whose transfer head (12) is provided with circulating entrant members and which transfers hot hollow glass containers (14) from the one transportation belt (11) on to the other transportation belt (13), both when the transportation belts (11, 13) which co-operate with the transfer head and which move at different speeds are arranged in angular relationship and when they are arranged in parallel relationship, characterised in that the transfer head (12) carries directly or indirectly with the interposition of an endless flexible transportation element (16) (for example a chain) a plurality of replaceable carrier member (19) which are matched to the hollow glass containers (14), that all carrier members (19) communicate by way of a rotary distributor with a vacuum generating means which by way of openings (24) provided in the carrier members (19) temprarily retains the hot hollow glass containers (14) on the carrier members (19) by a reduced pressure during the transfer operation from one transportation belt (11) on to the other (13), and that during the transfer operation the hollow glass containers (14) can be pneumatically lifted from the transportation belt and/or pressed against regions of the carrier members (19) by additional devices, wherein the period of time for which the hollow glass containers (14) are sucked and/or pressed against the carrier members (19) is controllable by valves (25) which each carrier memeber (19) has.

2. Apparatus according to claim 1 characterised in that the period for which the hollow glass containers (14) are sucked or pressed against the carrier members (19) is controllable in dependence on position (for example in dependence on angle).

3. Apparatus according to claim 1 and claim 2 characterised in that the transportation belts (11, 13) bend inclinedly in the region of the entry to the transfer bead (12), transversely with respect to the direction of flow of the hollow glass containers (14).

4. Apparatus according to claim 1 to 3 characterised in that the carrier members (19) which are of a crescent shape are kept flat on their rear side (21) while the front side (22) extends in an arcuate configuration and has an abutment projection.

5. Apparatus according to claim 4 characterised in that the carrier members (19) are made from asbestos-free material.

6. Apparatus according to claim 1 to 5 characterised in that the carrier members (19) are secured releasably, slidably and adjustably to the transfer head (12).

7. Apparatus according to claim 1 to 6 characterised in that the transfer device cooperates with a counting device.

8. Apparatus according to claims 1 to 7 characterised in that the transfer device is provided with a phase adjusting transmission.

9. Apparatus according to claims 1 to 8 characterised in that the carrier members (19) are successively acted upon by vacuum and compressed air.

**Revendications**

1. Dispositif de transport (10) pour récipients de verre creux, comportant des bandes transporteuses (11, 13) et un dispositif de transfert dont la tête de transfert (12) est pourvue d'organes d'entraînement et transfère d'une bande transporteuse (11) à une autre (13) des récipients de verre creux chauds (14), aussi bien dans le cas où les bandes transporteuses (11, 13) coopérant avec ledit dispositif de transfert et se déplaçant à des vitesses differentes présentent une configuration angulaire que dans le cas où elles sont disposées parallèlement l'une par rapport à l'autre, caractérisé en ce que la tête de transfert (12) porte directement, ou indirectement, avec interposition d'un organe transporteur (16) flexible sans fin (tel qu'une chaîne) une pluralité d'éléments porteurs (19) interchangeables et adaptés auxdits récipients de verre creux (14), en ce que tous les éléments porteurs (19) sont reliés par un distributeur rotatif à une source de vide qui maintient temporairement, par l'effet de la dépression, les récipients creux en verre chauds (14) sur lesdits éléments porteurs (19) par l'intermédiaire d'ouvertures (24) ménagées dans les éléments porteurs (19), pendant le processus de transfert d'une des bandes transporteuses (11) vers l'autre (13), et en ce que, pendant le processus de transfert, les récipients creux en verre (14) sont susceptibles d'être écartis pneumatiquement, par des dispositifs complémentaires, de la bande transporteuse et/ou d'être pressés pneumatiquement contre des zones des éléments porteurs (19), la durée de l'aspiration et/ou du pressage exercés sur lesdits récipients creux en verre (14) pour les appliquer contre les éléments porteurs (19) étant réglable par des valves (25) disposées sur chaque élément porteur (19).

2. Dispositif selon la revendication 1, caractérisé en ce que la durée d'aspiration et/ou de pressage exercées sur les récipients creux en verre (14) pour les appliquer contre les éléments porteurs (19) est réglable en fonction de la position (par exemple en fonction de l'angle).

3. Dispositif selon la revendication 1 ou 2, caractérisé en ce que les bandes transporteuses (11, 13) sant inclinées dans la zone d'entrée de la tête de transfert (12), transversalement par rapport à la direction de l'avance des récipients creux en verre (14).

4. Dispositif selon l'une des revendications 1 à 3, caractérisé en ce que les éléments porteurs (19), en forme de croissant présentent une face arrière (21) plane, tandis que leur face avant (22) est incurvée et comporte un nez de butée.

5. Dispositif selon la revendication 4, caractérisé en ce que les éléments porteurs (19) sont formés d'un matériau exempt d'amiante.

6. Dispositif selon les revendications 1 à 5, caractérisé en ce que les éléments porteurs (19) sont montés sur la tête de transfert (12) de manière amovible, déplaçable et réglable.

7. Dispositif selon l'une des revendications 1 à 6, caractérisé en ce que le dispositif de transfert coopère avec un organe de comptage.

8. Dispositif selon l'une des revendications 1 à 7, caractérisé en ce que le dispositif de transfert coopère avec un engrenage de décalage de phase.

9. Dispositif selon l'une des revendications 1 à 9, caractérisé en ce que les éléments porteurs (19) sont soumis successivement à l'action du vide (aspiration) et de l'air comprimé.

FIG.1

FIG.2

FIG.3

**FIG.4**

**FIG.5**